# EUROPÄISCHE PATENTSCHRIFT

(11) **EP 2 940 365 B1**
(45) Veröffentlichungstag und Bekanntmachung des Hinweises auf die Patenterteilung: **25.01.2017**
(21) Anmeldenummer: 15165657.6
(22) Anmeldetag: 29.04.2015
(51) Int. Cl.: F16L 47/28, B23B 41/00, B23Q 9/02, B26D 3/16, B29C 65/00

(54) **VORRICHTUNG ZUR HERSTELLUNG EINER ÖFFNUNG**
DEVICE FOR PRODUCING AN OPENING
DISPOSITIF DESTINÉ À LA FABRICATION D'UNE OUVERTURE

(30) Priorität: 02.05.2014 DE 202014102052 U
(43) Veröffentlichungstag der Anmeldung: 04.11.2015
(73) Patentinhaber: REHAU AG + Co, 95111 Rehau (DE)
(72) Erfinder: Sieber, Jürgen, 91074 Herzogenaurach (DE); Ciolak, Mariusz, 91052 Erlangen (DE); Hendel, Roland, 91086 Aurachtal (DE)

(56) Entgegenhaltungen:
- DE-A1- 1 704 130
- JP-A- 2002 011 792
- US-A1- 2012 067 190

## Beschreibung

Die Erfindung betrifft eine Vorrichtung zur Herstellung einer Öffnung in der Wand eines Hauptrohres, weiterhin betrifft die Erfindung eine Rohrbearbeitungseinrichtung mit einer solchen Vorrichtung zur Herstellung einer Öffnung in der Wand eines Hauptrohres.

Bei Rohren für die Leitung von Fluiden, insbesondere bei Abwasserrohren, kommt es sehr häufig vor, dass Seitenanschlüsse herzustellen sind, um ein Fluid in das Hauptrohr einzuleiten.

Dazu kann das Hauptrohr aufwendig ausgegraben werden, nach dem Abschneiden eines Abschnitts des Hauptrohres ist an dieser Stelle ein T-Stück einzusetzen, dieses ist anzuschließen und abzudichten. Mit Hilfe des T-Stücks im Hauptrohr lässt sich dann der Seitenanschluss ausbilden.
Ein solches Vorgehen ist zeitaufwendig, verursacht hohe Kosten und ist technisch im Hinblick auf die dann nachträglich wieder herzustellende Dichtheit aller Anschlüsse problematisch.

Eine andere Lösung, einen Seitenanschluss an einem Hauptrohr herzustellen, besteht darin, ein Sattelstück, das an die äußere Form des Hauptrohres angepasst ist, an der Stelle, an der der Seitenanschluss hergestellt werden soll, anzubringen, an diesem Sattelstück dann die herzustellende Öffnung an der Wand des Hauptrohres anzuzeichnen und nach Wegnahme des Sattelstücks dann die Öffnung beispielsweise mithilfe einer Stichsäge oder eines anderen Schneidwerkzeuges herzustellen. Hierdurch entstehen Grate, die aufwendig nachzuarbeiten sind und stets eine Stelle darstellen, an der es zu Ablagerungen, ggf. auch zu Undichtigkeiten kommen kann.
Eine solche Herstellweise ist ungenau, zeitaufwendig, fehleranfällig und verursacht daneben auch hohe Kosten.

In einer gegenüber der vorgenannten verbesserten Technik wird ein Sattelstück an der Wand des Hauptrohres durch beispielsweise Kleben oder Schweißen befestigt, anschließend wird die Öffnung mithilfe einer Bohrkrone, die an den Innendurchmesser des am Sattelstück befestigten Rohrabschnitts angepasst ist, hergestellt, indem mit der Bohrkrone die notwendige Öffnung in der Wand des Hauptrohrs hergestellt wird.
Der Nachteil dieser Technik besteht darin, dass die Bohrkrone entweder einen Rohrabschnitt mit einem perfekt kreisförmigen Querschnitt voraussetzt oder dass die Bohrkrone kleiner gewählt werden muss, als der Querschnitt des Rohrabschnitts am Sattelstück, sollte dieses Rohr beispielsweise eine gewisse Ovalität aufweisen.

Aus der Druckschrift DE 1 704 130 A1 ist ein Verfahren zur Herstellung eines Rohrabzweigers aus thermoplastischen Kunststoff bekannt, bei dem an dem Rohrabschnitt, in den das abzweigende Stück einzusetzen ist, mittels eines geheizten Stempels dieses Stück eingesetzt wird und durch dieses abzweigende Rohr hindurch eine der Form der Anschlussstelle entsprechende Öffnung in das Rohr geschnitten wird.

Die Druckschrift JP 2002 011792 A offenbart ein Herstellverfahren für einen Abzweig eines Seitenrohres von einem Hauptrohr, die beide aus thermoplastischem Kunststoff bestehen, wobei das Seitenrohr mittels Friktionswärme an das Hauptrohr angeschweißt wird. Nach dem Anschweißen wird mit Hilfe eines Werkzeugs die Wandung des Hauptrohres durch das Seitenrohr hindurch durchbrochen.

Schließlich ist in der Druckschrift US 2012/067190 A1 ein Kantenbearbeitungswerkzeug zur Kenntnis gegeben, welches für die Bearbeitung von Kanten an Rohren und Platten geeignet ist und diese beispielsweise mit einer Fase versieht, wobei das Werkzeug ein angetriebenes Messer und ein Führungsmittel, mit dem das Werkzeug an der Kante anbringbar und entlang dieser bewegbar ist, aufweist.

Hier setzt die Erfindung ein, deren Aufgabe es ist, eine Vorrichtung zur Herstellung einer Öffnung anzugeben, mit deren Hilfe es in einfacher Weise möglich ist, eine Öffnung in der Wand eines Hauptrohres herzustellen, insbesondere auch dann, wenn der Rohrabschnitt am Sattelstück keinen ideal kreisrunden Querschnitt, sondern einen ovalen Querschnitt aufweist.

Darüber hinaus soll die Vorrichtung zur Herstellung einer Öffnung einfach zu bedienen und kostengünstig und unter den Einsatzbedingungen auf einer Baustelle handhabbar und brauchbar sein.

Eine weitere Aufgabe der vorliegenden Erfindung besteht darin, eine Rohrbearbeitungseinrichtung anzugeben, die eine Vorrichtung zur Herstellung einer Öffnung in der Wand eines Hauptrohres umfasst.

Die Aufgabe, eine Vorrichtung zur Herstellung einer Öffnung in der Wand eines Hauptrohres anzugeben, erfährt ihre Lösung in Anspruch 1.
Weitere vorteilhafte Ausgestaltungen der Erfindung sind in den Unteransprüchen angegeben.

Im Rahmen der vorliegenden Erfindung wurde erkannt, dass eine Vorrichtung zur Herstellung einer Öffnung in der Wand eines Hauptrohres, dessen Wand ein Polymermaterial enthält oder aus Polymermaterial besteht, im Bereich eines an der Außenoberfläche des Hauptrohres fluiddicht befestigten Sattelstückes in einfacher Weise möglich ist.

Das Sattelstück weist einen Rohrabschnitt auf, dessen Achse mit der Achse des Hauptrohres einen Winkel einschließt. Mithilfe eines Schneidwerkzeuges zum Öffnen der Wand des Hauptrohres, das durch eine Einrichtung geführt ist, dessen Bewegungsbahn durch die Wand des Rohrabschnittes am Sattelstück vorgegeben ist, kann die Öffnung hergestellt werden, um dadurch eine Fluidverbindung zwischen dem Hauptrohr und dem Rohrabschnitt zu schaffen.
Erfindungsgemäß ist dazu vorgesehen, dass die Einrichtung sich mit Roll- und / oder Gleitelementen maximal entlang 1/4 des Umfangs des Rohrabschnitts an der Innen- und / oder der Außenoberfläche der Wand des Rohrabschnitts abstützt und entlang zumindest eines Teils des Umfangs des Rohrabschnitts bewegbar ist.

Die erfindungsgemäße Vorrichtung zur Herstellung einer Öffnung in der Wand eines Hauptrohres, wie vorstehend beschrieben, löst in einfacher Weise das Problem, dass sowohl Rohrabschnitte am Sattelstück, welche einen ideal kreisrunden Querschnitt aufweisen, wie auch insbesondere solche, die einen ovalen Querschnitt aufweisen, in einfacher Weise konturgenau zur Herstellung einer Öffnung in der Wand eines Hauptrohres bearbeitbar sind.

Durch das erfindungsgemäße Vorsehen, dass sich die Einrichtung mit Roll- und / oder Gleitelementen maximal entlang 1/4 des Umfangs des Rohrabschnitts an der Innen- und / oder der Außenoberfläche der Wand des Rohrabschnitts abstützt, wird in einfacher Weise erreicht, dass mithilfe eines Schneidwerkzeuges zum Öffnen der Wand des Hauptrohres, das durch eine Einrichtung geführt ist, eine konturgenaue Öffnung in der Wand des Hauptrohres erzeugt werden kann. Die Größe der Öffnung entspricht dem Querschnitt des Rohrabschnitts am Sattelstück.

Damit kann vorteilhaft die Form der Öffnung in der Wand des Hauptrohres genau an den Querschnitt des Rohrabschnitts am Sattelstück angepasst werden, wenn der Rohrabschnitt am Sattelstück keinen ideal kreisrunden Querschnitt, sondern einen ovalen Querschnitt aufweist.

Ein solcher von der idealen kreisrunden Geometrie abweichender Querschnitt des Rohrabschnitts am Sattelstück kann z.B. dadurch zustande kommen, dass bei dessen Herstellung, bei dessen Lagerung oder beim Befestigen des Sattelstücks am Hauptrohr beispielsweise durch Druckkräfte der Querschnitt verändert wird, oder dass im Bauteil eingefrorene Spannungen freigesetzt werden bzw. dass Spannungen am Bauteil durch unsachgemäße Handlungen hervorgerufen werden.

Dem kann mit Hilfe der vorliegenden Erfindung in einfacher Weise begegnet werden, indem der Querschnitt des Rohrabschnitts am Sattelstück herangezogen wird, um nach dessen Form den passgenauen Durchbruch herzustellen.

Insbesondere kann mithilfe der Vorrichtung gemäß vorliegender Erfindung ein glatter und damit idealer Übergang zwischen der Wand des Hauptrohres, einem Abschnitt des Sattelstücks und der Innenwandung des Rohrabschnittes am Sattelstück geschaffen werden. Dadurch kommt es in diesem Bereich zu keinem Sprung, Grat oder zu vorstehenden Absätzen, die den Fluss des Fluids an dieser Stelle behindern würden und damit entstehenden Ablagerungen, bis hin zu Verstopfungen Vorschub leisten würden.

Mithilfe der erfindungsgemäßen Vorrichtung zum Öffnen der Wand des Hauptrohres ist es in einfacher Weise möglich, schnell und ohne großen zeitlichen Aufwand in kostengünstiger Weise die Öffnung herzustellen und damit einen Seitenanschluss an dem Hauptrohr zu schaffen.

Es hat sich im Rahmen der vorliegenden Erfindung ergeben, dass die Roll- und / oder Gleitelemente in Form von Rollen und / oder Gleitkufen ausgebildet sind, wobei sich die Rollen und / oder Gleitkufen an der Innen- und an der Außenoberfläche der Wand des Rohrabschnitts abstützen. Insbesondere hat sich als sehr vorteilhaft ergeben, wenn vier Rollen und / oder Gleitkufen sich an der Innen- und zwei Rollen und / oder Gleitkufen sich an der Außenoberfläche der Wand des Rohrabschnitts abstützen.

Durch das Vorsehen von vier Rollen und / oder Gleitkufen an der Innen- und zwei Rollen und / oder Gleitkufen an der Außenoberfläche der Wand des Rohrabschnitts wird eine besonders einfache und sichere Führung der Einrichtung entlang des Umfangs des Rohrabschnitts erreicht. Hierdurch lässt sich in einfacher und schneller Weise eine präzise Öffnung in der Wand des Hauptrohres herstellen.

Als sehr vorteilhaft im Rahmen der vorliegenden Erfindung wird die Möglichkeit gesehen, dass die Einrichtung entlang des gesamten Umfangs des Rohrabschnitts bewegbar ist. Durch diese Maßnahme ist sichergestellt, dass es möglich ist, die Öffnung in der Wand des Hauptrohres in einem Bewegungsablauf herzustellen, ohne dass beispielsweise der Vorgang der Herstellung der Öffnung mehrfach unterbrochen und neu zu starten ist.

Die Vorrichtung gemäß vorliegender Erfindung ist in besonders vorteilhafter Weise ausgestaltbar, wenn vorgesehen ist, dass an der Einrichtung eine Verstelleinrichtung vorgesehen ist, die Roll- und / oder Gleitelemente an die Innen- und / oder Außenoberfläche der Wand des Rohrabschnitts anzunähern oder davon weg zu bewegen.

Durch das Vorsehen einer Verstelleinrichtung an der Einrichtung ist es in einfacher Weise möglich, die Einrichtung jeweils an die verschiedenen Durchmesser der Rohrabschnitte am Sattelstück sowie an die unterschiedlichen Rohrwanddicken der Rohrabschnitte am Sattelstück anzupassen und diese bei der Herstellung der Öffnung in der Wand des Hauptrohres zu berücksichtigen. Hierdurch lässt sich in besonders exakter Weise eine Öffnung in der Wand des Hauptrohres herstellen.

Als Schneidwerkzeug hat sich in der vorliegenden Erfindung ein Bohrer oder ein Fräskopf oder eine Messerklinge oder eine Hobelklinge oder eine Säge bewährt, wobei auch Kombinationen der vorstehend genannten möglich sind. Mit solchen Schneidwerkzeugen ist es in einfacher Weise möglich, die Wand des Hauptrohres zur Herstellung der benötigten Öffnung zu durchdringen und die Öffnung dann je nach benötigter Größe herzustellen. Auch die vorstehend genannten kombinierten Schneidwerkzeuge, beispielsweise die Kombination eines Bohrers und eines Fräskopfes, sind vorteilhaft einsetzbar.

Weiterhin kann mit den vorgenannten Schneidwerkzeugen eine glatte Schneidfläche am Übergang von der Wand des Hauptrohres zum Abschnitt des Sattelstückes und zur Innenwand des Rohrabschnitts am Sattelstück hergestellt werden. Dies begünstigt wesentlich den Fluss des Fluids durch den Seitananschluss.

Es hat sich im Rahmen der vorliegenden Erfindung als günstig erwiesen, wenn das Schneidwerkzeug elektrisch und / oder hydraulisch und / oder mittels Druckluft betrieben ist. Ein solches Schneidwerkzeug, das elektrisch und / oder hydraulisch und / oder mittels Druckluft betrieben ist, kann auf Baustellen in besonders einfacher Weise eingesetzt werden, da dort die genannten Antriebsenergien im Allgemeinen zur Verfügung stehen.

In einer sehr bevorzugten Weiterbildung der vorliegenden Erfindung ist vorgesehen, dass das Schneidwerkzeug gegen die Achse des Rohrabschnitts nicht geneigt ist. Hierdurch kann mit Hilfe des Schneidwerkzeugs eine Zylindermantelfläche am Übergang von der Wandung des Hauptrohres zum Abschnitt des Sattelstücks und zur Innenwand des Rohrabschnitts am Sattelstück hergestellt werden, die den Fluss des Fluids begünstigt.

In einer besonders bevorzugten Weiterbildung der vorliegenden Erfindung ist vorgesehen, dass das Schneidwerkzeug gegen die Achse des Rohrabschnitts geneigt ist. Hierdurch kann mit Hilfe des Schneidwerkzeugs eine Kegelmantelausschnittsfläche am Übergang von der Wandung des Hauptrohres zum Abschnitt des Sattelstücks und zur Innenwand des Rohrabschnitts am Sattelstück hergestellt werden, die in etwa ein trichterförmiges Aussehen hat, wobei der Trichter sich bevorzugt zum Hauptrohr hin öffnet, und so den Fluss des Fluids ganz besonders begünstigt.

Dadurch ist es in besonders vorteilhafter Weise möglich, eine sehr glatte und präzise Übergangsfläche herzustellen, die geeignet ist, ein Fluid zu leiten, ohne das es zu Ablagerungen, Absetzerscheinungen oder Verstopfungen kommt.

Bei der vorliegenden Erfindung ist es in einer günstigen Weiterbildung vorgesehen, dass die Bewegung der Einrichtung entlang zumindest eines Teils des Umfangs des Rohrabschnitts manuell oder durch einen Antrieb erfolgt.

Durch das Vorsehen einer manuellen Bewegung der Einrichtung kann die Einrichtung entsprechend einfach aufgebaut sein, wodurch diese einfach bedienbar und kostengünstig wird. Beim Vorsehen eines Antriebs zum Bewegen der Einrichtung kann das Schneidwerkzeug sehr präzise geführt werden, so dass eine sehr exakte Öffnung in der Wand des Hauptrohres erzeugbar ist.

In einer weiteren sehr bevorzugten Fortbildung der vorliegenden Erfindung ist vorgesehen, dass die Vorrichtung zur Herstellung einer Öffnung in der Wand eines Hauptrohres aus Vorrichtungselementen zusammensetzbar und in Vorrichtungselemente zerlegbar ist. Hierdurch kann die Vorrichtung in einfacher Weise nach Zerlegen in die einzelnen Vorrichtungselemente in einem Koffer oder in einem Container verstaut werden und ist damit leicht transportierbar, geschützt und leicht lagerbar.

Weiterhin ist damit ein guter Überblick über die Vollständigkeit der einzelnen Vorrichtungselemente gegeben.

An der Baustelle kann die Vorrichtung zur Herstellung einer Öffnung in der Wand eines Hauptrohres dann aus den Vorrichtungselementen in einfacher Weise zusammengesetzt werden. Die Vorrichtung steht in diesem Fall dann schnell und kurzfristig für die durchzuführenden Arbeiten zur Verfügung.

Die Lösung der Aufgabe, eine Rohrbearbeitungseinrichtung mit einer Vorrichtung zur Herstellung einer Öffnung in der Wand eines Hauptrohres anzugeben, erfolgt in Anspruch 10.

Es wurde im Rahmen der vorliegenden Erfindung erkannt, dass eine Rohrbearbeitungseinrichtung dann sehr vorteilhaft nutzbar ist, wenn diese wenigstens eine Vorrichtung zur Herstellung einer Öffnung in der Wand eines Hauptrohres gemäß vorstehender Beschreibung umfasst.

Unter Rohrbearbeitungseinrichtung wird dabei alles das verstanden, was benötigt wird, um einen Seitenanschluss an einem Hauptrohr herzustellen. Dazu gehört dann beispielsweise auch eine entsprechende technische Ausstattung, um ein Sattelstück an der Außenoberfläche der Wand eines Hauptrohres fluiddicht zu befestigen, beispielsweise durch Kleben und / oder durch Schweißen, insbesondere durch Elektroschweißen.
Damit umfasst die Rohrbearbeitungseinrichtung dann auch eine Stromquelle, um die Elektroschweißung des Sattelstücks auf dem Hauptrohr durchzuführen.

Weiterhin umfasst die Rohrbearbeitungseinrichtung auch entsprechende Mittel, Energie bereitzustellen, um die erfindungsgemäße Vorrichtung zur Herstellung einer Öffnung einer Wand eines Hauptrohres zu betreiben. Dies kann eine Stromquelle, eine Hydraulikquelle oder eine Druckluftquelle sein.

Weiterhin kann die Rohrbearbeitungseinrichtung auch entsprechende Austausch-, Ersatz- und Verschleißteile für die Vorrichtung zur Herstellung einer Öffnung in der Wand eines Hauptrohres umfassen.

Die vorliegende Erfindung findet Anwendung bei der Herstellung von Seitenanschlüssen an Rohren. Dies betrifft insbesondere die Tiefbautechnik, weiterhin die Abwassertechnik, die

Erfindung kann auch im Zuge des Baus bzw. der Erweiterung von Gebäuden, von Kläranlagen, von Schwimmbädern und von technischen Einrichtungen zum Einsatz kommen. Weitere wichtige Merkmale und Vorteile der Erfindung ergeben sich aus den Unteransprüchen, aus den Fig. und aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Bevorzugte Ausführungsbeispiele der Erfindung sind in den Fig. dargestellt und werden in der nachfolgenden Beschreibung näher erläutert, wobei sich gleiche Bezugszeichen auf gleiche oder funktional gleiche oder ähnliche Bauteile beziehen.

Die vorliegende Erfindung wird anhand der beigefügten Fig. wie folgt näher beschrieben. Hierzu zeigt:
- Fig. 1: eine seitliche Ansicht der erfindungsgemäßen Vorrichtung zur Herstellung einer Öffnung in der Wand eines Hauptrohrs in einer teilweise geschnittenen Ansicht während der Herstellung der Öffnung;
- Fig. 2: eine geschnittene Aufsicht auf die erfindungsgemäße Vorrichtung zur Herstellung einer Öffnung in der Wand eines Hauptrohrs während der Herstellung der Öffnung.

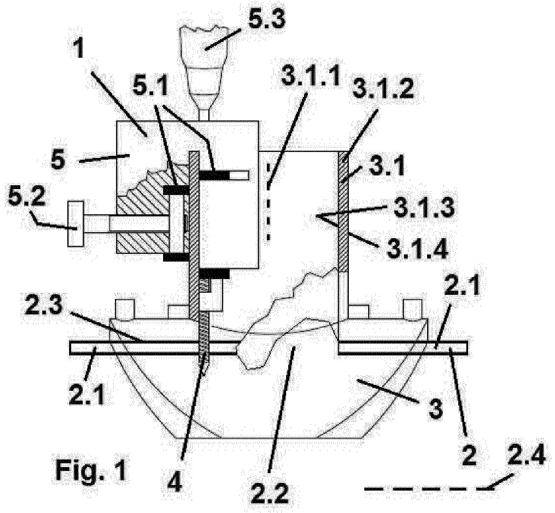

In Fig. 1 ist in einer seitlichen Darstellung, die teilweise geschnitten ist, die Vorrichtung 1 gemäß vorliegender Erfindung zur Herstellung einer Öffnung 2.2 in der Wand 2.1 eines Hauptrohrs 2 während der Herstellung der Öffnung 2.2 dargestellt.

Das Hauptrohr 2, das in einer Schnittdarstellung mit seiner Wand 2.1 gezeigt ist, wobei die Wand ein Polymermaterial enthält bzw. aus Polymermaterial besteht, ist nur etwa zur Hälfte gezeigt. Das Hauptrohr weist eine Achse 2.4 auf.

Auf der Außenoberfläche 2.3 des Hauptrohrs 2 ist ein Sattelstück 3 befestigt, welches eine an die Form des Hauptrohres 2 angepasste Form aufweist. Das Sattelstück 3 ist fluiddicht auf der Außenoberfläche 2.3 des Hauptrohrs 2 durch Schweißen, im vorliegenden Fall durch einen Elektroschweißvorgang verbunden.

Das Rohrstück 3 weist einen Rohrabschnitt 3.1 auf, der aus dem Sattelstück etwa senkrecht hervorsteht. Der Rohrabschnitt 3.1 weist eine Achse 3.1.1 auf. Die Achse 3.1.1 des Rohrabschnitts 3.1 und die Achse 2.4 des Hauptrohrs 2 stehen etwa senkrecht aufeinander, schließen also einen Winkel von etwa 90 ° ein. In anderen hier nicht gezeigten Ausführungsbeispielen der Erfindung kann auch ein anderer Winkel vorliegen, wie beispielsweise etwa 45 °, so dass der Rohrabschnitt 3.1 entsprechend schräg zum Hauptrohr 2 ausgerichtet ist.

Der Rohrabschnitt 3.1 am Sattelstück 3 weist eine Länge auf, die etwa seinem Durchmesser entspricht.

Das dem Sattelstück 3 gegenüberliegende Ende des Rohrabschnitts 3.1 ist glatt abgeschnitten. An den dem Sattelstück 3 gegenüberliegendem Ende des Rohrabschnitts 3.1 ist eine Einrichtung 5 festgelegt. Die Einrichtung 5 kann mit Roll- und / oder Gleitelementen 5.1, im vorliegenden Fall mit Rollen, die mit der Innenoberfläche 3.1.3 bzw. der Außenoberfläche 3.1.4 des Rohrabschnitts 3.1 in Kontakt sind, vollständig um den Umfang des Rohrabschnitts 3.1 herumbewegt werden.

An der Einrichtung 5 ist ferner eine Verstelleinrichtung 5.2 vorgesehen, mit der die Roll- und / oder Gleitelemente 5.1, im vorliegenden Fall Rollen, auf die Innenoberfläche 3.1.3 bzw. Außenoberfläche 3.1.4 des Rohrabschnitts 3.1 herangeführt oder von diesen wegbewegt werden können.

In einer einfachen Ausführungsform ist die Verstelleinrichtung 5.2 ein Schraubelement, mit dem der Abstand der Rollen, die der Außenoberfläche 3.1.4 zugeordnet sind, von der Außenoberfläche 3.1.4 des Rohrabschnitts 3.1 vergrößert oder verkleinert werden kann.

An der Einrichtung 5 ist weiterhin ein Schneidwerkzeug 4 befestigt, welches im vorliegenden Fall als kombiniertes Bohr- / Fräswerkzeug ausgebildet ist. Das Schneidwerkzeug 4 wird durch eine Antriebseinrichtung 5.3, beispielsweise durch einen aufgesetzten Motor, angetrieben.

In Fig. 1 ist gezeigt, dass das Schneidwerkzeug 4 gerade die Wand 2.1 des Hauptrohres 2 durchdrungen hat. Bei einer Bewegung vollständig entlang des Umfangs des Rohrabschnitts 3.1 der Einrichtung 5 erzeugt das Schneidwerkzeug 4 den Durchbruch 2.2, der in der Fig. 1 auf der rechten Seite bereits dargestellt ist.

Erfindungsgemäß ist weiterhin vorgesehen, dass das Schneidwerkzeug 4 in Kontakt mit der Innenoberfläche 3.1.3 des Rohrabschnitts 3.1 geführt wird. Hierdurch ergibt sich ein glatter Übergang zwischen der durchbrochenen Wand 2.1 des Hauptrohres 2, dem Abschnitt des Sattelstücks 3 und der Innenoberfläche 3.1.3 des Rohrabschnitts 3.1, ohne dass dabei ein Grat, Absatz oder Vor- bzw. Rücksprung entsteht. Dies ist in Fig. 1 im rechten Abschnitt gezeigt.

Im vorliegenden Beispiel wird die Einrichtung 5 manuell vollständig entlang des Umfangs des Rohrabschnitts 3.1 bewegt, wobei das Schneidwerkzeug 4 durch einen Fräsvorgang die Öffnung 2.2 in der Wand 2.1 des Hauptrohres 2 erzeugt.

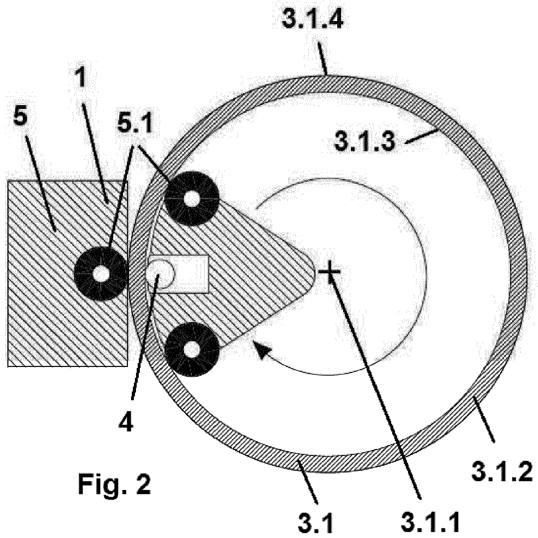

In Fig. 2 ist eine geschnitten dargestellte Aufsicht auf die Vorrichtung 1 zur Herstellung einer Öffnung 2.2 in der Wand 2.1 eines Hauptrohres 2 während der Herstellung der Öffnung 2.2 gezeigt.

Hierzu blickt man von oben auf den Rohrabschnitt 3.1 in Richtung des hier nicht dargestellten Hauptrohrs 2.

Die Einrichtung 5 der Vorrichtung 1 ist am Rohrabschnitt 3.1 festgelegt. An der Einrichtung 5 sind Roll- und / oder Gleitelemente 5.1 vorgesehen, die im vorliegenden Beispiel als Rollen ausgebildet sind.

Gemäß des in den beiden Fig. 1 und 2 gezeigten Ausführungsbeispiels sind insgesamt sechs Rollen angeordnet, wobei zwei Rollen mit der Außenoberfläche 3.1.4 des Rohrabschnitts 3.1 in Kontakt stehen, während vier Rollen mit der Innenoberfläche 3.1.3 des Rohrabschnitts 3.1 in Kontakt stehen.

Zwischen den Rollen, die der Innenoberfläche 3.1.3 des Rohrabschnitts 3.1 zugeordnet sind, ist das Schneidwerkzeug 4 angeordnet. Das Schneidwerkzeug 4 ist dabei etwa der Rolle gegenüberliegend angeordnet, die der Außenoberfläche 3.1.4 zugeordnet ist.

Das Schneidwerkzeug 4 liegt an der Innenoberfläche 3.1.3 derartig an, dass es bei einem Materialabtrag maximal zu einer sehr geringen Entfernung von Material von der Innenoberfläche 3.1.3 des Rohrabschnitts 3.1 kommt, die im Bereich von höchsten wenigen Zehntelmillimetern liegt.

Die Vorrichtung 1 kann manuell betätigt vollständig um den Umfang des Rohrabschnitts 3.1 herumbewegt werden, was durch den Pfeil im Rohrabschnitt 3.1 versinnbildlicht ist.

Das Schneidwerkzeug 4 folgt dabei genau der Bahn, die die Einrichtung 5 zurücklegt und die durch den Umfang des Rohrabschnitts 3.1 vorgegeben ist. Wenn also der Querschnitt des Rohrabschnitts 3.1 nicht ideal kreisförmig ausgebildet ist, sondern eine gewisse Ovalität aufweist, wird die Einrichtung 5 der Vorrichtung 1 dieser Gestalt folgen, und das Schneidwerkzeug 4 wird eine entsprechend an die Ovalität des Querschnitts des Rohrabschnitts 3.1 angepasste Öffnung 2.2 in der Wand 2.1 des Hauptrohres 2 herstellen. Diese Öffnung ist dann frei von Graten, Absätzen oder Vor- bzw. Rücksprüngen und entsprechend fluidtechnisch optimiert.

### Bezugszeichenliste

- 1: Vorrichtung
- 2: Hauptrohr
- 2.1: Wand
- 2.2: Öffnung
- 2.3: Außenoberfläche
- 2.4: Achse
- 3: Sattelstück
- 3.1: Rohrabschnitt
- 3.1.1: Achse
- 3.1.2: Wand
- 3.1.3: Innenoberfläche
- 3.1.4: Außenoberfläche
- 4: Schneidwerkzeug
- 5: Einrichtung
- 5.1: Roll- und/oder Gleitelemente
- 5.2: Verstelleinrichtung
- 5.3: Antriebseinrichtung

## Patentansprüche

1. Vorrichtung (1) zur Herstellung einer Öffnung (2.2) in der Wand (2.1) eines Hauptrohres (2), wobei die Wand (2.2) ein Polymermaterial enthält oder aus Polymermaterial besteht, im Bereich eines an der Außenoberfläche (2.3) des Hauptrohres (2) fluiddicht befestigten Sattelstückes (3), welches einen Rohrabschnitt (3.1) aufweist, dessen Achse (3.1.1) einen Winkel mit der Achse des Hauptrohres (2.4) einschließt, mit einem Schneidwerkzeug (4) zum Öffnen der Wand (2.1) des Hauptrohres (2), das durch eine Einrichtung (5) geführt ist, dessen Bewegungsbahn durch die Wand (3.1.2) des Rohrabschnittes (3.1) am Sattelstück (3) vorgegeben ist, zur Schaffung einer Fluidverbindung zwischen dem Hauptrohr (2) und dem Rohrabschnitt (3.1), **dadurch gekennzeichnet, dass** die Einrichtung (5) sich mit Roll- und/oder Gleitelementen (5.1) maximal entlang etwa 1/4 des Umfangs des Rohrabschnitts (3.1) an der Innen- (3.1.3) und/oder Außenoberfläche (3.1.4) der Wand (3.1.2) des Rohrabschnitts (3.1) abstützt und entlang zumindest eines Teils des Umfangs des Rohrabschnitts (3.1) bewegbar ist.

2. Vorrichtung (1) nach Anspruch 1, **dadurch gekennzeichnet, dass** die Roll- und/oder Gleitelemente (5.1) in Form von Rollen und/oder Gleitkufen ausgebildet sind, wobei sich die Rollen und/oder Gleitkufen an der Innen- (3.1.3) und an der Außenoberfläche (3.1.4) der Wand (3.1.2) des Rohrabschnitts (3.1) abstützen, wobei sich insbesondere wenigstens vier Rollen und/oder Gleitkufen an der Innen- (3.1.3) und wenigstens zwei Rollen und/oder Gleitkufen an der Außenoberfläche (3.1.4) der Wand (3.1.2) des Rohrabschnitts (3.1) abstützen.

3. Vorrichtung (1) nach Anspruch 1 oder 2, **dadurch gekennzeichnet, dass** die Einrichtung (5) entlang des gesamten Umfangs des Rohrabschnitts (3.1) bewegbar ist.

4. Vorrichtung (1) nach einem der vorausgehenden Ansprüche, **dadurch gekennzeichnet, dass** die Bewegung der Einrichtung (5) entlang zumindest eines Teils des Umfangs des Rohrabschnitts (3.1) manuell oder durch einen Antrieb erfolgt.

5. Vorrichtung (1) nach einem der vorausgehenden Ansprüche, **dadurch gekennzeichnet, dass** an der Einrichtung (5) eine Verstelleinrichtung (5.2) vorgesehen ist, die Roll- und/oder Gleitelemente (5.1) an die Innen- (3.1.3) und/oder Außenoberfläche (3.1.4) der Wand (3.1.2) des Rohrabschnitts (3.1) anzunähern oder davon wegzubewegen.

6. Vorrichtung (1) nach einem der vorausgehenden Ansprüche, **dadurch gekennzeichnet, dass** das Schneidwerkzeug (4) als Bohrer oder als Fräskopf oder als eine Messerklinge oder als eine Hobelklinge oder als Säge ausgebildet ist.

7. Vorrichtung (1) nach einem der vorausgehenden Ansprüche, **dadurch gekennzeichnet, dass** das Schneidwerkzeug (4) elektrisch und/oder hydraulisch und/oder mittels Druckluft betrieben ist.

8. Vorrichtung (1) nach einem der vorausgehenden Ansprüche, **dadurch gekennzeichnet, dass** das Schneidwerkzeug (4) gegenüber der Achse (3.1.1) des Rohrabschnitts (3.1) eine Neigung oder keine Neigung aufweist.

9. Vorrichtung (1) nach einem der vorausgehenden Ansprüche, **dadurch gekennzeichnet, dass** diese aus Vorrichtungselementen zusammensetzbar und in Vorrichtungselemente zerlegbar ist.

10. Rohrbearbeitungseinrichtung mit wenigstens einer Vorrichtung (1) zur Herstellung einer Öffnung (2.2) in der Wand (2.1) eines Hauptrohres (2) nach einem der Ansprüche 1 bis 9.

## Claims

1. Apparatus (1) for producing an opening (2.2) in the wall (2.1) of a main pipe (2), wherein the wall (2.2) comprises a polymer material or is composed of polymer material, in the region of a saddle piece (3) which is fastened in fluid-tight fashion to the outer surface (2.3) of the main pipe (2), which saddle piece has a pipe section (3.1) whose axis (3.1.1) encloses an angle with the axis of the main pipe (2.4), having a cutting tool (4) for opening the wall (2.1) of the main pipe (2), which cutting tool is guided by a device (5) whose movement path is predefined by the wall (3.1.2) of the pipe section (3.1) on the saddle piece (3), in order to create a fluidic connection between the main pipe (2) and the pipe section (3.1), **characterized in that** the device (5) is supported, by way of rolling and/or sliding elements (5.1), on the inner surface (3.1.3) and/or outer surface (3.1.4) of the wall (3.1.2) of the pipe section (3.1) along at most approximately 1/4 of the circumference of the pipe section (3.1), and is movable along at least a part of the circumference of the pipe section (3.1).

2. Apparatus (1) according to Claim 1, **characterized in that** the rolling and/or sliding elements (5.1) are in the form of rollers and/or skids, wherein the rollers and/or skids are supported on the inner surface (3.1.3) and on the outer surface (3.1.4) of the wall (3.1.2) of the pipe section (3.1), wherein, in particular, at least four rollers and/or skids are supported on the inner surface (3.1.3) and at least two rollers and/or skids are supported on the outer surface (3.1.4) of the wall (3.1.2) of the pipe section (3.1).

3. Apparatus (1) according to Claim 1 or 2, **characterized in that** the device (5) is movable along the entire circumference of the pipe section (3.1).

4. Apparatus (1) according to one of the preceding claims, **characterized in that** the movement of the device (5) along at least a part of the circumference of the pipe section (3.1) is realized manually or by way of a drive.

5. Apparatus (1) according to one of the preceding claims, **characterized in that**, on the device (5), an adjustment device (5.2) is provided for moving the rolling and/or sliding elements (5.1) toward or away from the inner surface (3.1.3) and/or outer surface (3.1.4) of the wall (3.1.2) of the pipe section (3.1).

6. Apparatus (1) according to one of the preceding claims, **characterized in that** the cutting tool (4) is in the form of a drill or in the form of a milling head or in the form of a knife blade or in the form of a plane blade or in the form of a saw.

7. Apparatus (1) according to one of the preceding claims, **characterized in that** the cutting tool (4) is operated electrically and/or hydraulically and/or by way of compressed air.

8. Apparatus (1) according to one of the preceding claims, **characterized in that** the cutting tool (4) has an inclination, or no inclination, relative to the axis (3.1.1) of the pipe section (3.1).

9. Apparatus (1) according to one of the preceding claims, **characterized in that** it can be assembled from apparatus elements and dismantled into apparatus elements.

10. Pipe machining device having at least one apparatus (1) for producing an opening (2.2) in the wall (2.1) of a main pipe (2) according to one of Claims 1 to 9.

## Revendications

1. Ensemble (1) servant à former dans la paroi (2.1) d'un tube principal (2), la paroi (2.2) contenant un matériau polymère ou étant constituée d'un matériau polymère, une ouverture (2.2) au niveau d'une pièce (3) en selle qui est fixée de manière étanche aux fluides sur la surface extérieure (2.3) du tube principal (2) et qui présente une section tubulaire (3.1) dont l'axe (3.1.1) forme un angle avec l'axe du tube principal (2.4), à l'aide d'un outil de coupe (4) qui ouvre la paroi (2.1) du tube principal (2) et qui est guidé par un dispositif (5) dont le parcours de déplacement à travers la paroi (3.1.2) de la section tubulaire (3.1) prévue sur la pièce (3) en selle est prédéterminé, pour former une liaison d'écoulement entre le tube principal (2) et la section tubulaire (3.1),
**caractérisé en ce que**
au maximum sur d'environ 1/4 de la périphérie de la section tubulaire (3.1), le dispositif (5) est soutenu par des éléments de roulement et/ou de coulissement (5.1) sur la surface intérieure (3.1.3) et/ou la surface extérieure (3.1.4) de la paroi (3.1.2) de la section tubulaire (3.1) et peut se déplacer le long d'au moins une partie de la périphérie de la section tubulaire (3.1).

2. Ensemble (1) selon la revendication 1, **caractérisé en ce que** les éléments de roulement et/ou de glissement (5.1) sont configurés en forme de rouleaux et/ou de coussins coulissants, les rouleaux et/ou les coussins coulissants s'appuyant sur la surface intérieure (3.1.3) et sur la surface extérieure (3.1.4) de la paroi (3.1.2) de la section tubulaire (3.1), au moins quatre rouleaux et/ou coussins coulissants s'appuyant en particulier sur la surface intérieure (3.1.3) et au moins deux rouleaux et/ou coussins coulissants sur la surface extérieure (3.1.4) de la paroi (3.1.2) de la section tubulaire (3.1).

3. Ensemble (1) selon les revendications 1 ou 2, **caractérisé en ce que** le dispositif (5) peut être déplacé sur la totalité de la périphérie de la section tubulaire (3.1).

4. Ensemble (1) selon l'une des revendications précédentes, **caractérisé en ce que** le déplacement du dispositif (5) sur au moins une partie de la périphérie de la section tubulaire (3.1) s'effectue à la main ou par un entraînement.

5. Ensemble (1) selon l'une des revendications précédentes, **caractérisé en ce qu'**un dispositif d'ajustement (5.2) qui approche ou éloigne les éléments de roulement et/ou de coulissement (5.1) de la surface intérieure (3.1.3) et/ou de la surface extérieure (3.1.4) de la paroi (3.1.2) de la section tubulaire (3.1) est prévu sur le dispositif (5).

6. Ensemble (1) selon l'une des revendications précédentes, **caractérisé en ce que** l'outil de coupe (4) est configuré comme foret, comme tête de fraisage, comme lame de couteau, comme lame de rabot ou comme scie.

7. Ensemble (1) selon l'une des revendications précédentes, **caractérisé en ce que** l'outil de coupe (4) est entraîné électriquement, hydrauliquement et/ou à l'air comprimé.

8. Ensemble (1) selon l'une des revendications précédentes, **caractérisé en ce que** l'outil de coupe (4) présente une inclinaison ou ne présente pas d'inclinaison par rapport à l'axe (3.1.1) de la section tubulaire (3.1).

9. Ensemble (1) selon l'une des revendications précédentes, **caractérisé en ce qu'**il peut être constitué d'éléments de l'ensemble ou être démonté en éléments de l'ensemble.

10. Dispositif de traitement de tube présentant au moins un ensemble (1) selon l'une des revendications 1 à 9, servant à former une ouverture (2.2) dans la paroi (2.1) d'un tube principal (2).
